# EUROPEAN PATENT SPECIFICATION

(11) **EP 1 583 283 B1**
(45) Date of publication and mention of the grant of the patent: **19.12.2007**
(21) Application number: 04251940.5
(22) Date of filing: 31.03.2004
(51) Int. Cl.: H04L 12/28, H04L 29/06

(54) **Telecommunications system**
Telekommunikationssystem
Système de télécommunications

(43) Date of publication of application: 05.10.2005
(73) Proprietor: SIEMENS AKTIENGESELLSCHAFT, 80333 München (DE)
(72) Inventor: Eardley, Philip Laurence, Ipswich Suffolk IP4 2AH (GB); Hepworth, Eleanor Margaret, Romsey Hampshire SO51 5RE (GB); Hancock, Robert Edward, Southampton SO18 1NW (GB); Eisl, Jochen Oliver, 85748 Garching (DE)

(56) References cited:
- C.W. NG, T.TANAKA: "Securing Nested Tunnels Optimizazion with Access Router Option" NETWORK WORKING GROUP, INTERNET-DRAFT, October 2002 (2002-10), pages 1-49, XP015004582
- P. THUBERT, M. MOLTENI (CISCO SYSTEMS): "Ipv6 reverse routing header and its application to mobile networks" NETWORK WORKING GROUP INTERNET-DRAFT, 25 June 2003 (2003-06-25), pages 1-17, XP015005499
- P.THUBERT, M. MOLTENI: "Taxonomy of route optimization models in the nemo context" NETWORK WORKING GROUP, INTERNET-DRAFT, 10 March 2003 (2003-03-10), pages 1-17, XP015005501 SINGAPORE

## Description

The present invention relates to a telecommunications system, in particular to a telecommunications system which includes a movable network.

It is known for portable communication devices to attach to different points on a network. Thus, for example, a user can connect a portable computer to one attachment point, move to a new geographical location where there is provided another attachment point and attach the computer to the network at that new attachment point. Where users travel together, for example on a common vehicle such as a train or aeroplane, it can be advantageous for the communication equipment of each user to be connected to a local network, such as a Local Area Network (LAN) within the vehicle. As well as being able to communicate amongst each other, the users will normally be able to receive common services from the local network. Furthermore, if the attachment to the main network is through a radio link, and the local (moving) network includes a transmitter/receiver, the communication devices may take advantage of the transmitter/receiver provided by the local network.

So that the communication devices can be reached at different attachment points on the main network, a directory facility such as a "Home Agent" can be provided in the main network. The directory facility for each communication device normally stores information which can be used to facilitate the routing of data to the current attachment point of the communication device. The directory facility may contain the address corresponding to the current attachment point, or the directory facility may contain another address indicative of a location where further routing information can be found. When the attachment point of a communication device changes, the communication device will normally send a message to the directory facility associated with it, so that the routing information stored in the directory facility can be updated to reflect the change in the attachment point of the communication device.

In one of the several known protocols for communicating between nodes, when a communication device or "mobile node" attaches to another node such as a base station, the communication device is allocated a temporary address indicative of the topological position of the base station. The communication device will also normally have a permanent address which is retained as the communication device moves from one attachment point to another.

It is known for a moveable network to have a nested structure or for the moveable network to have one or more subnetworks within it. The moveable network will normally have a main router connected to the or each subnetwork. A subnetwork will normally include a subrouter for routing messages to and from the devices connected to it, the subrouter of a subnetwork being connected to the main router of the moveable network. For example, if the moveable network is a LAN within a vehicle such as a train, a subnetwork may be a personal area network, that is, a plurality of personal or portable communication devices which a person can carry with them when moving from one carriage to another within the train. The personal area network will normally include a router, also carried (or moveable) by the person, for connecting to one or possibly several attachment points on the train.

Normally, each device or addressable router in the moveable network will have a corresponding directory agent for routing data to that device. In the case of a nested network, it is known for data to be tunnelled: (i) from the directory agent of a device in the subnetwork and to the directory agent of a subrouter of the subnetwork; and (ii), from the directory agent of the subrouter and then to the directory agent for the main router, before being transmitted to the point of attachment (base station) of the moveable network. However, the two levels of tunnelling required may introduce an undesirable amount of overhead data and/or processing requirements. Furthermore, because for each layer of subnesting in the moveable network, there will be an additional layer of tunnelling required, this problem will be increased for moveable networks having a large number of subnetworks.

Ng & Tanaka : "Securing Nested Tunnels Optimization with access router option", IETF, 2002 discloses a solution to the nested tunnelling problem for moveable networks. A mobile router informs the home agent HA about the global address of the access router to which it is attached to. The HA can then reconstruct the chain of access routers to which the sender is attached to. An update message from a mobile router to a directory agent in the network is triggered by the receipt and analysis of a Binding Acknowledgement.

Thubert & Molteni : "Ipv6 reverse routing header and its application to mobile networks", IETF, 2003 solves the same problem of how to avoid the nested tunnelling for moveable networks by using a reverse routing header. The mobile routers in the path, in addition to tunnelling packets to their HA, add a reverse routing header.

According to one aspect of the present invention, there is provided a telecommunications system including: a movable network having a plurality of upper level nodes; an upper level router means for selectively routing data to one or more of the upper level nodes; a plurality of lower level nodes; and, a lower level router means for selectively routing data to one of more of the lower level nodes, the upper and lower level router means being attachable such that when attached, the upper level router means can route data towards the lower level router means, the main network having at least one network node and a plurality of spaced apart attachment points to which the movable network can temporarily attach, the upper level router means being configured to transmit routing messages to the network node, each routing message containing routing information facilitating the routing of data from the network node to the current attachment point of the movable network, wherein the upper level router means is configured to (i) detect a first attachment event resulting from the attachment of the lower level router means, and, in response to the detection of the attachment event, to transmit a first routing message to the network node, the first attachment event being the transmission from the lower level router means of an update message to the directory agent, the update message containing updated routing information to allow the directory agent to take into account the attachment of the lower level router means, and, (ii) detect a second attachment event resulting from the attachment of the movable network to a new attachment point, and, in response to the detection of the second attachment event, to transmit a second routing message to the network node.

Because a routing message can be sent in response to the lower level router attaching to the network, the routing of data from the network node to the moveable network will be facilitated. Moreover, because it is the upper level router that is configured to send another routing message when the moveable network moves to a new attachment point, the lower level router and the lower level nodes connected to it need not be aware of the movement, thereby releasing processing capability for other communications-related tasks.

The upper and lower level nodes may be a personal communication device or terminal such as a personal computer. Alternatively, some of the nodes may each be a router to which a further network is connected. The attachment points of the main network may be static, but alternatively the attachment points may be moveable. For example, one or more attachment points may be located on an orbiting satellite. Alternatively, the attachment points may be located on a moveable or moving vehicle.

The network node may be a calling node from which a message originates, but preferably the network node will be a directory agent, the term directory agent being used to indicate computer software and/or hardware for storing routing information, which routing information can be used to facilitate the routing of data to a node associated with the directory agent, the routed data originating from a node other than that of the directory agent.

A directory agent will normally store a mapping between the permanent address and the temporary address of a communication device associated with that directory agent, such that the directory agent can intercept data, and forward it to the communication device. To allow the directory agent to more easily intercept the data, the directory agent can have a network address (that is, a topologically static address), which address belongs to the same subnetwork as the permanent address of the communication device. At least some of the nodes of the moveable network will preferably be addressable and have an identifier associated therewith, preferably in the form of a permanent address, which permanent address is retained by a node as the node moves from one attachment point to another, such an address also being known as a home address). The addressable nodes will preferably also have a temporary address (also known as a care of address). The directory agent associated with a node will normally store a mapping between the permanent address and the temporary address of the communication device, such that the directory agent can intercept data, and forward the intercepted data to the communication device. To allow the directory agent to easily intercept the data, the directory agent may have a network address, that is, a topologically static address, which belongs to the same subnetwork as the permanent address of the communication device.

In a preferred embodiment of the invention, the routing message transmitted by the moveable network will be sent to the directory agent of the lower level router means. This will allow the directory agent for the lower level router means to route messages more directly to the moveable network, reducing the need for the directory agent for the lower level router means to first tunnel packets to a directory agent associated with the upper level router means.

The first attachment event will preferably be the transmission from the lower level router means of an update message to its directory agent, since, conveniently, many existing nodes are configured to transmit an update message when attaching to a network. Such a message will preferably be routed through the upper level router means, so that the upper level router means can conveniently detect that such a message has been sent. However, the attachment event may simply be a message from the lower level router means indicating that it has attached.

An update message may be a binding update, containing a mapping between the current temporary address of the lower level router means and the permanent address of the lower level router means.

If existing protocols are employed, the temporary address of the lower level router means may be topologically related to that of the directory agent for the upper level router means: for example, the two addresses may share a common prefix portion. However, because the directory agent for the lower level router means can receive a routing message, which routing message is preferably indicative of the current attachment point of the lower level router means, the disadvantages of existing protocols can be reduced. In particular, the need for a message to be routed via the directory agent for the upper level router means is reduced.

The second attachment event is preferably the receipt of a new temporary address by the upper level router means, since this will normally occur when the moveable network connects to a new attachment point, such as a new base station. However, a new point of attachment may be detected in other ways: for example, the upper level router means may interrogate its point of attachment.

The lower level router means may be connected directly to the upper level router means, or, alternatively, the routers may be indirectly connected by an intermediate router means disposed between the upper and lower level routers. Messages from the lower level router means to the main network can then be routed through both the intermediate level router means and the upper level router means, the upper level router means forming a connection with a base station, for example.

The upper level router means will preferably be configured to store the destination address of update messages passing through it. This will allow the upper level router means to form a "list of updatees" whose members need to be updated when the moveable network changes its point of attachment. The list of updatees will preferably include the respective network address of each directory agent for the routers of the moveable network (i.e., the lower level router means and, the intermediate level router means if the intermediate level router means is present), since their addresses can conveniently be obtained from the update messages passing through the upper level router means. However, the list of updatees may include other nodes, such as directory agents for lower level nodes, or directory agents for intermediate level nodes.

The intermediate level router means may also store "a list of updatees" i.e., the addresses of the directory agents of the nodes connected to the intermediate level router means, so that messages from these directory agents can be routed more easily to the moveable network, with a reduced need to pass through the directory agent for the upper level router means. The main network will preferably have a predetermined topological structure. Normally, the network will be formed by a plurality of nodes, and a plurality of links for connecting the nodes, each node in the main network having a respective network address for routing data thereto. Each node may be a router or other data processing equipment, and need not be located at the intersection of network paths. For example, a node may be formed by terminal equipment, such as a computer terminal, or other communications equipment. Preferably, each directory agent will be implemented in one or more nodes, the nodes and/or agents each having a network address which is indicative of the respective topological position of each respective node and/or agent. The functionality of a given agent may be distributed between two or more nodes, which nodes need not be co-located. The main network may include two or more sub-networks, the sub-networks for example being administered by different administrators, and possibly having nodes whose addresses share a common prefix portion. The directory agents may be located in the same subnetwork, or the directory agents may be distributed between the sub-networks.

Each router means may be localised in the form of a router, the functionality of the router means may be distributed. For example, the routing function of a router means may be located at one node, whereas the functionality (e.g., the processor means and memory) for generating routing messages may be located at another node.

In order to route data efficiently through the main network, the addresses of the nodes in the main network will preferably be arranged in a hierarchical structure relative to one another, each address including an ordered set of components, each node having a hierarchical level associated therewith, each component of an address corresponding to a hierarchical level, wherein a high level node at one hierarchical level is connected to a plurality of low level nodes which are at a lower hierarchical level, the addresses of the respective lower level nodes being such that the value of the component corresponding to the level of the high level node is common to each low level node. In such a system, the respective addresses of the high level node and the lower level nodes connected thereto will share the same prefix, the leading components being the same for each address. To distinguish between the different nodes, the address of each node will preferably have different trailing components; that is, the suffixes will be different for each address. Examples of such a system include systems running according to the Internet Protocol, such as IPv6 or IPv4. In such a system, data will preferably be transported as data packets, each packet having a payload portion, and an address portion in which the destination address of the packet is stored.

Further aspects of the invention are specified in the appended claims. The present invention is described in further detail below, by way of example, with reference to the following drawings in which:
Figure 1 shows a prior art telecommunications system;
Figure 2 shows a prior art telecommunications system according to the invention;
Figure 3 shows a first sequence of messages between the nodes of the telecommunication system of Figure 2;
Figure 4 shows a further sequence of messages between the nodes of the telecommunication system of Figure 2;
Figure 5 shows in more detail a mobile router of Figure 2; and,
Figure 6 shows a home agent of Figure 2;

With regard to the abbreviations used in the description below, the following definitions each provide an example of the terms the abbreviations refer to: MR: Mobile Router, a gateway device of the moving network that physically connects the moving network to the rest of the world, i.e. external networks like the Internet. PN: Portable node (or equivalently a personal node), a node that is connected to the Internet through the mobile router - there may be many PNs associated with one MR. CN: Correspondent Node, a node within the Internet that communicates with the PN. CoA: Care of Address, an address allocated by a visited network to a node that joins it. MIP: Mobile IP. This is a method of ensuring that personal nodes remain reachable, by allowing them to associate a CoA with their well-known (e.g. DNS registered) home address. Basic MIP assumes that the network is fixed and only the end terminal moves. GN: Ground Network - the network to which the MR directly physically connects (one example of a "main network"). VN: Vehicular Network is a special instantiation of a moving network like a train or plane network providing services to the passengers. HA: Home Agent. This term comes from Mobile IP based mobility management and describes a routing component that redirects messages to the current location of a personal node.

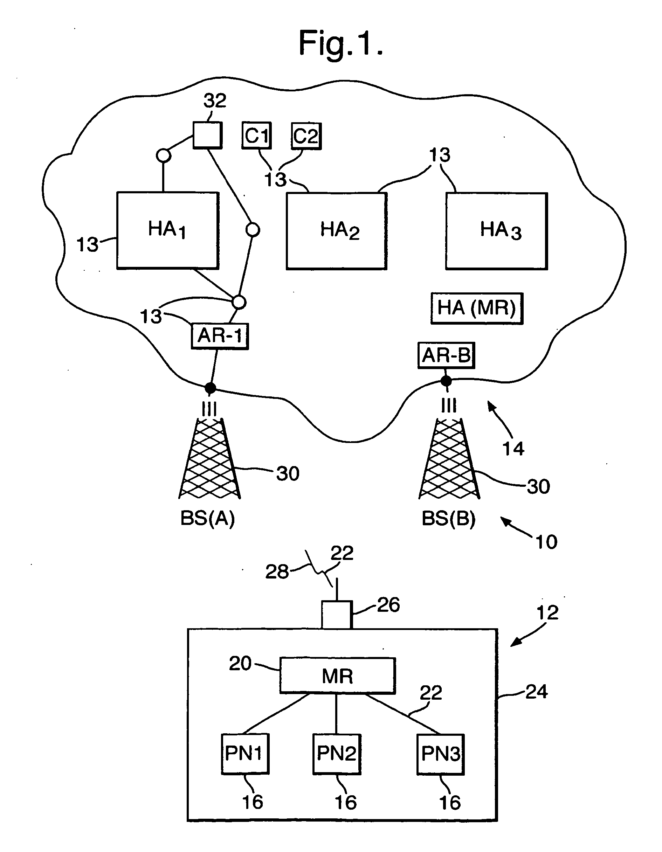

*The prior art:* figure 1 shows a prior art network system 10 in which a mobile (that is, a movable) network 12 can communicate with a fixed (main) network 14, the fixed network having a plurality of nodes 13 which are generally static. The mobile network 12 includes a plurality of moveable or otherwise mobile nodes 16 which mobile nodes include a plurality of personal nodes PN and at least one mobile router 20 to which the personal nodes are connected by a respective connection 22. A personal node may for example be a mobile telephone or computer equipment such as a "laptop" computer, or other portable communications equipment, each respective connection 22 to the mobile router being a wired or wireless connection. When the mobile network 12 moves, the personal nodes 16 move together with the router 20, such that the personal nodes retain their respective connections 22 with the router 20. For example, the mobile router 20 may be included in a train or other vehicular system, and the personal nodes may each be personal communications equipment carried by passengers on the train. Such a mobile network 12 is also known as a vehicular network. Clearly, as the train is moving, the personal nodes will generally move in common with the mobile router 20, although some relative movement between the nodes may occur as passengers move within the train. The composition of the mobile network 12 will generally be temporary as some personal nodes will cease their connection 22 with the router 20, and leave the network, (e.g., when a passenger gets off a train), whilst other nodes may join the network and form a new connection 22 (e.g., when a passenger gets onto a train). In other words, a mobile network can be referred to as a 'network in motion' or NEMO, that is, a collection of portable nodes (PNs) that move together with (at least) one of them (the mobile router, MR) having a backhaul connection and thus providing the PNs with connection to the rest of the network. The basic principle of the moving network's concept is visualized in Figure 1. A group of moving nodes which commonly move with the same ground speed in the same direction can constitute to a moving network. There is at least one gateway router, called the mobile router here (a further example of a mobile node), which provides access for the contained client nodes (portable nodes or equivalently personal nodes) towards external networks. A correspondent node such as a static node C1 is reached through a transport network (part of a "main " network) in the backhaul.

The mobile router 20 has a wireless transmitter/receiver stage 26 for communicating over a wireless radio link 28 with a base station 30 of the fixed network 14 (in the example of Figure 1, the mobile network 12 is within range of base station BS-A). When the mobile network 12 moves from a point within range of a first mobile station BS-A, to a point within range of a second base station, BS-B, a handover process occurs, in which the radio link 28 with BS-A is discontinued and a new radio link is formed with BS-B, such that the mobile network "attaches" to BS-B. In order for a caller node C1 to communicate with one of the personal node, say PN1, the data between the caller node C1 and the personal node PN1 must be routed through the fixed network 14, in particular through the correct base station, the correct base station 30 being dependent on the position of the mobile network as the mobile network moves. Several systems/protocols exist for routing data through the correct base station. In the IPv6 (Internet Protocol version v6) system, each node 13 (including the base stations 30) is allocated a permanent IP address by an allocation unit 32. Each address has a plurality of components, 16 in the case of IPv6, each component belonging to a different hierarchical level. Addresses can be represented in the form a.b.c.d..., where each letter corresponds to a component, higher letters of the alphabet corresponding to lower level components. The topology of the fixed network 14 is arranged such that the addresses of lower level nodes, each of which is connected to a common node at the next level above, will share a component (normally the prefix). The level of the shared component corresponding to the level of the common node. This allows packets to be routed between nodes in the fixed network solely on the basis of the IP address of the destination node carried by the packet.

The mobile router 20 and the personal nodes 16 each have a permanent address allocated to them (by the address allocation unit 32). However, because these nodes do not have fixed topological positions, within the network system 10, the IP addresses of these nodes will not normally indicate their position with regard to other nodes of the fixed network, and thus the IP address of a personal node will not normally in itself be sufficient for a packet addressed to it position of that node.

Considering the general case where a mobile node (including a mobile router) connects directly to a base station: to allow a mobile node to be "found" in the network system, and to therefore allow packets to be routed to a mobile node, a base station 30 will normally allocate a temporary address to a node directly connected to it. In IPv6, such an address will normally be a "co-located care of address", this being allocated to a mobile node from a set of spare v6 addresses which that base station has previously been allocated by the allocation unit 32. The care of addresses allocated by a base station will have different suffixes but will have a component (the prefix) in common with the permanent address of the base station itself, the position of that component in the address corresponding to the hierarchical position of the base station, so that packets whose destination is one of the allocated care of addresses can be routed to the issuing base station. In this way, the allocated care of address and the address of the base station will be topologically related. To allow the base station to route packets to the appropriate mobile node, the base station will keep a table which maps the care of address (or suffix) of each mobile node to the radio channel which the mobile router 20 is configured to receive. Each base station BS-A, BS-B will normally be connected to the fixed network via respective access routers AR-A, AR-B, which access routers may store and allocate care of addresses, the base stations serving merely to transmit messages from the access routers.

Each mobile node has associated therewith a home agent (HA) node in the main (fixed) network, a home agent being topologically located such that it can intercept packets being sent to the permanent address of the mobile node with which it is associated (for simplicity, it is assumed that a home agent node only has one mobile node associated with it). In the simplified case where a mobile node is connected directly to base station, (i.e., without an intervening router), the home agent will store, in a correspondence table, a mapping between the permanent address of its mobile node and the care of address currently allocated to the mobile node by the base station. (Thus, each home agent will store a mapping between on the one hand an identifier for the mobile node associated with the home agent, and on the other hand a temporary address for other routing information for routing data to associated mobile node: in the case where a home agent acts for a plurality of mobile nodes, the home agent will store such a mapping for each mobile node). If the home agent intercepts any packets for its mobile node, the home agent is configured to encapsulate each packet it intercepts in a packet whose destination address is the care of address of its mobile node PN, thereby establishing a "tunnel" between the home agent and the mobile node. The home agent then transmits the encapsulated packet towards the mobile node. Because the care of address is indicative of the topological position of the base station to which the mobile node is connected, the encapsulated packet can be routed to the base station in the normal way.

With regard to the mobile network 12 in particular, the mobile router MR will have a home agent MR_HA, which home agent will store a mapping between the current care of address of the mobile router and the permanent address of the router, which permanent address is topologically related to the (permanent) address of the router home agent MR_HA. When the MR changes its point of attachment, it will send a binding update to its home agent, the binding update including information allowing the home agent to update the mapping between the permanent address of MR and the care of address of MR, such that the mapping or equivalently the binding reflects the new care of address.

Returning to the situation shown in Figure 1 where the mobile nodes of the mobile network are connected to a mobile router, the address allocation is as follows: (a) the mobile router MR connected to the first base station BS-A obtains a CoA from the base station, which CoA is topologically related to position of the base station BS-A; and, (b) each personal node PN1-PN3 obtains a respective CoA from the MR, which addresses share a common prefix and are thus topologically related to the home agent MR_HA of the MR (of course, addresses could be topologically related in other ways). Each personal node then informs its respective home agent of its CoA address. A packet from a calling node (such as C1) addressed to PN1 will be intercepted by HA1 (home agent for PN1). HA1 will encapsulate the received packet in a new packet having as a destination address the CoA address allocated to PN1 by MR. Since this address is topologically related to the permanent address of MR, the packet will be intercepted by the home agent for MR, MR_HA. The home agent MR_HA will treat the packet as a packet addressed to MR, (because the CoA of PN1 is topologically related to the permanent address of MR). Thus, MR_HA will encapsulate the packet in a packet addressed to the current CoA for MR, and will then forward this (twice) encapsulated packet to the base station BS-A, since the CoA of MR is topologically related to the address of BS-A. BS-A will then forward to the packet to MR. Once the twice encapsulated packet reaches MR, MR will undo the encapsulation created by MR-HA, and will forward the resulting packet addressed to PN1, since this packet bears the CoA address allocated to PN1 by MR. In this way, a first tunnel is set up between HA1 and MR_HA, (created by a first level of encapsulation), and a second tunnel is set up between MR_HA and MR, (created by a second level of encapsulation). When the point of attachment changes, from BS-A to BS-B for example, the MR receives a new CoA from BS-B, which new CoA is transmitted by the MR as a binding update to its home agent. One advantage of this prior art technique is that the personal nodes need not be aware of the change in the point of attachment, since the second tunnel ends at the mobile router MR2.

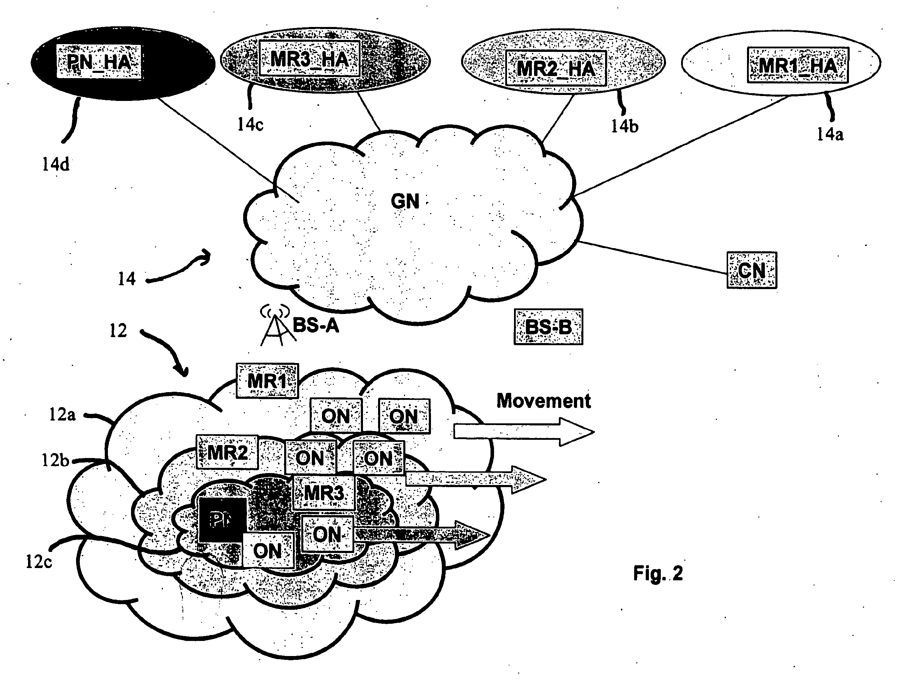

Figure 2 shows a system according to the invention, but will now be referred to in describing further prior art, like components in the prior art and in the invention being given like reference characters. A mobile network 12 is shown which is formed by a plurality of nested subnetworks 12a, 12b, 12c, each having a respective mobile router MR1, MR2, MR3 associated therewith (MR1 performing the role of a gateway router, as for the mobile router 20 of Figure 1). It is known for a mobile network to be nested in a hierarchical fashion, such that the nodes in the bottom level subnetwork 12c are connected to a node in the mid-level subnetwork 12b, whereas the nodes of the mid-level network are connected to a node in the top level network. In the example shown in Figure 2, the nodes PN of the bottom level network (only one is shown, the others being designated ON) are connected to MR3; MR3 and the other personal nodes (ON) of the mid-level subnetwork connect to MR2; and, MR2 and the other personal nodes (ON) of the top level subnetwork connect to MR1, the mobile router MR1 being connected to a base station. Each mobile router has a home agent in the main network 14, the mobile routers MR1, MR2 and MR3 having home agents MR1_HA, MR2_HA, and MR3_HA respectively. Each home agent may be located in a respective home network 14a-d, as shown in Figure 2, the home networks being within the main network 14. The home network for a home agent comprise nodes whose addresses share a common prefix with the home agent, such that the nodes including the home agent have topologically related addresses. Each of the subnetworks in the moving network 12 will normally contain a plurality of personal nodes, each of which will have an associated home agent in the main network: in Figure 2 however only one personal node PN is shown as having a home agent PN_HA in the main network.

The system of address allocation is similar to that described with respect to Figure 1, in that each personal node and router is allocated a temporary or care of address (CoA) by a node to which it is attached (normally the connecting node in the next hierarchical level up), and forwards this allocated care of address to its home agent. (Although each home agent in Figure 2 only has a single mobile node associated therewith, two or more nodes may share the same home agent). Each MR informs its HA of its CoA. Because each allocated address belongs to the subnet of the allocating node, the allocated address will share a prefix with the home agent of the allocating node: that is, the address of the home agent and the allocated CoA will be topologically related. This makes it easier for packets to be forwarded from the main network in which a calling node CN is situated to the personal node PN. Thus a packet from a calling node CN addressed to a PN's home address HoA is routed first to PN_HA, then through MR3_HA, then MR2_HA, and MR1_HA, before going to BS-A for transmission onto the mobile network 12. This results in three levels of encapsulation.

*In at least one embodiment of the present invention,* address allocation is carried out as in the prior art: that is, PN obtains a CoA from MR3, MR3 obtains a CoA from MR2, MR2 obtains a CoA from MR1 (the nesting could include more than three levels). MR1 obtains a CoA (MR1.CoA) allocated by GN, the main network 14 referred to here as the "ground network", that is, the network through which MR1 connects to the rest of the network, for example GPRS. In particular, MR1 will be allocated an address by the access router serving base station BS-A to which the mobile network 12 is temporarily connected through a radio link. (In the address notation herein, an address is indicated by a first term indicating the node to which the address belongs, and a second term separated from the first term by a stop mark, the second term being indicative of the category which the address falls in: e.g., a permanent or "home" address HoA or care of address CoA).

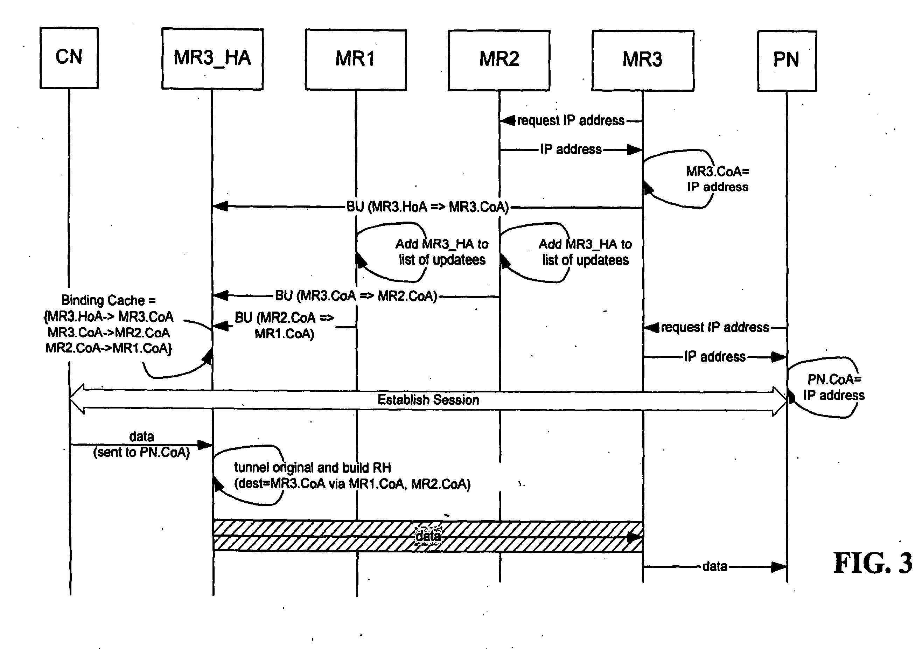

However, instead of each node simply informing its home agent of its current CoA, the following steps are carried out as indicated in Figure 3, which shows the flow of messages between the nodes. Messages are indicated by arrows arranged in chronological order such that later messages are indicated by arrows lower down in the figure. It is assumed that MR1 and MR2 are already connected and that MR3 has just connected to MR2 (i.e., the lower level subnetwork 12c has just entered the mid level subnetwork 12b) such that MR3 requests and receives a CoA (IP address) from MR2. MR3 then sends a binding update (BU) to its home agent MR3_HA informing its home agent of its (new) CoA, the binding update containing a mapping between on the one hand the home (permanent) address for MR3, that is, MR3.HoA, and, on the other hand, the care of address for MR3, that is, MR3.CoA.

The binding update from MR3 is routed to pass through MR2. In the invention, MR2 is configured to detect the presence of a binding update (BU) message passing through it. For example, such a message may be recognised because it is sent to a well-known port number (in Ipv4) or using a well-known extension number (in Ipv6). Upon detecting a BU message, MR2 responds by creating a further BU message containing a mapping between the care of address for MR3 and MR2, that is, a mapping between MR3.CoA and MR2.CoA. This further BU message is also addressed to MR3_HA, and is forwarded by MR2 to MR1 or onward transmission to MR3_HA. Furthermore, in response to detecting the BU message from MR3, MR2 retains (i.e., copies to its memory) the address of MR3_HA in association with an instruction such that: in response to MR2 receiving a new CoA (MR2.CoA), MR2 transmits a new BU message to MR3_HA which BU message maps MR3.CoA to the new MR2.CoA. The stored MR3_HA address may be also used for sending other future mobility updates to MR3_HA.

The BU message from MR3 will also be routed through MR1, since MR1 is the top level or gateway router for routing messages to and from the other nodes in the mobile network 12. In response to detecting a BU message from MR3, MR1 is configured to: (1) create a yet further BU which contains a mapping between the care of addresses of MR1 and MR2, that is between MR2.CoA and MR1.CoA; (2) send the new BU to MR3_HA; and, (3) store the address of MR3_HA with an instruction that MR1 will send further mobility updates to MR3_HA, for example when MR1 obtains a new CoA address (MR1.CoA), when the mobile network 12 moves from an attachment point at BS-A to a new attachment point at BS-B.

From the received respective BU messages from MR1, MR2 and MR3, the home agent MR3_HA is configured to build a binding cache at MR3_HA which binding cache includes the following addresses: MR3.HoA; MR3.CoA; MR2.CoA; and, MR1.CoA, together with an indication of the order of each address in relation to at least one of the others. For example, the binding cache will store the addresses in the sequence indicated above. In particular, the binding cache will store respective mappings between: MR3.HoA and MR3.CoA; MR3.CoA and MR2.CoA; MR2.CoA and MR1.CoA. Thus, when a session is to be established between a calling node CN and a personal node, a packet from CN to PN is addressed to the permanent address of PN, that is PN.HoA; the packet is intercepted by PN_HA (the home agent for PN). Since PN_HA has received the CoA allocated by MR3 as the CoA for PN, the PN_HA encapsulates the packet as a packet addressed to the CoA allocated by MR3, such that the packet is intercepted by MR3_HA. If route optimisation is in operation, CN will have been informed of the CoA for PN, and the packet for CN will be routed directly to MR3_HA.

Upon receiving a packet with the MR3.CoA address, MR3_HA encapsulates the packet in a new packet having a routing header. The routing header is obtained from the binding cache at MR3_HA, the routing header containing: the CoA for each of the mobile routers MR1, MR2, MR3 of the nested mobile network; and, an indication of the order in which each CoA should be visited. In this way, the routing header determines a path which the encapsulated packet should take through the nested network, the first address in the path being the CoA for the top level router, MR1, which will be used to route the encapsulated packet through the main network and to the correct attachment point of MR1, that is, BS-A, for onward transmission over the radio link to MR1. This is possible since the CoA of MR1 is indicative of its topological position, MR1.CoA having been allocated by BS-A. Because the first address (MR1.CoA) in the routing header is the topologically correct address for the mobile network (at BS-A), packets can be routed to BS-A without first having to go via MR2_HA and MR1_HA. It will however be appreciated that MR1.CoA need not be the "first address in the routing header, provided that some other indication is given in the header such as a flag to show that MR1.CoA is the topological address for the point of attachment of the mobile network.

Thus, the routing header contains a series of intermediate addresses through which the packet should be routed in the moving network on the way to the destination node's mobile router, in the present example, MR3. The required addresses are those of the routing nodes in the mobile network, including the routing node which makes a (temporary) connection to the main network, the address of this node being representative of the topological position of the moving or mobile network. To allow for efficient routing, the header will also contain sequence information indicating the order in which the stored addresses should be visited: in the present example, this is just the level of nesting or the hierarchical position of each mobile router or other routing node in the mobile network. In the example given above, the binding cache at MR3_HA contains a plurality of fields, the binding updates from different mobile routers in the mobile network being responsible for updating different fields of the binding cache. Thus, each field is associated with a mobile router, the home agent for MR3 being configured to update the field associated with a mobile router when the home agent receives a binding update BU from that router.

The first field in the cache is a mapping between the home address HoA for the host home agent (i.e., the home agent for the "host" router to which the receiving node PN is connected) and the care of address CoA for that host home agent; the next field is a mapping between the CoA for the host router and the CoA for the router in the next level up in the nested structure; and, the last field is a mapping between the CoA for the highest level router (which CoA will be topologically related to the address of the base station) and the CoA for the router at the level beneath the highest level. More generally, if there are N levels in the nested structure, the mappings will be: MRN.HoA to MRN.CoA; MRN.CoA to MR(N-1).CoA; MR(N-1).CoA to MR(N-2).CoA; MR(N-2).CoA to MR(N-3).CoA; .....; MR2.CoA to MR1.CoA.

Table 1 illustrates the binding or mapping information in each field (left hand column) and the mobile router responsible for updating each field (right hand column).

**Table 1**

| | |
|---|---|
| MR3.HoA => MR3.CoA | MR3 |
| MR3.CoA => MR2.CoA | MR2 |
| MR2.CoA => MR1.CoA | MR1 |

When a mobile router changes its point of attachment and thus receives a new CoA, the mobile router is configured to send an update message to MR3_HA (and other nodes in the main network on the mobile router's list of updatees) informing MR3_HA (and any other nodes on its list of updatees) of its new CoA. This information is sent as a binding update message which contains a mapping between the new CoA of the mobile router and the CoA it has allocated to the mobile router in the next level down (inwards) in the nested structure. Thus, when MR1 moves, that is, when it connects to a different base station, MR1 will send a binding update message to MR3_HA, which update message will contain a mapping between MR2.CoA (which has remained unchanged) and MR1.new-CoA (the new CoA for MR1). (There are various choices as to the exact time that 'the list of nodes to update' is altered. eg it could be done on the BU or on the BU-ack [ie the msg from MR3-HA to MR3 acknowledging the BU]). Table 2 shows that the cache at MR3_HA is updated when MR1 obtains a new CoA.

**Table 2**

| | |
|---|---|
| MR3.HoA => MR3.CoA | MR3 |
| MR3.CoA => MR2.CoA | MR2 |
| MR2.CoA => MR1.new-CoA | MR1 |

The registration steps as indicated above may be carried out above when MR2 enters the nested network, so that packets to personal nodes connected directly to MR2 can be efficiently routed (from MR2_HA, for example) to the base station to which the nested network is connected (via MR1). Thus, when MR2 obtains a CoA from MR1, MR2 will send a binding update to MR2_HA, which binding update BU2 will be detected by MR1. In response to detecting the BU2 message, MR1 may be configured to create a further BU2 message addressed to MR2_HA, which further BU2 message contains a mapping between MR2.CoA and MR1.CoA. MR2_HA will then form a binding cache containing two fields: a first field for the mapping between MR2.HoA, updatable by MR2; and, a second field, for the mapping between MR2.CoA and MR1.CoA, updatable by MR1. MR1 will then store the address for MR2_HA, with an instruction to update MR2_HA with a new BU when MR1 receives a new CoA, that is, MR2_HA will be included in MR1's list of updatees. In the more general case where the moveable or moving network contains N nested levels, the binding cache for the home agent at the Nth level will contain N fields, N being an integer.

In more detail, if MR2 moves and obtains a new CoA (MR2.new-CoA), it sends a BU to MR3_HA as shown in table 3. However, in this case, it will be appreciated that whilst the field corresponding to MR2 has been updated, the field corresponding to MR1 has retained the previous CoA for MR2. This problem can be overcome in one of two ways. Preferably, the BU from MR2 may be interpreted by MR1 as an instruction for MR1 to send a BU to MR3_HA. That is, MR1 will preferably be configured such that upon detecting a BU message from MR2 passing through MR1, MR1 is prompted to send a BU message itself with the new CoA for MR2. Alternatively, MR2 may send a message to the "new MR1" (which is reachable through "new MR1".HoA or equally MR2.new-CoA), which requests MR1 to send a BU to MR3_HA. In either case, information about the previous MR1 to which MR2 was previously connected may either be timed out or be explicitly removed. Another possiblilty is that: the old-MR1 remembers to send a BU on getting an update from MR2 - this may be timed out / removed at at later time for several reasons, eg: [1] the old-MR1 would eventually have to remember a lot of info that is pointless [2] the addresses will eventually get re-allocated, and there might be an error case where MR1 sends a BU for the old set-up rather than the new one.

**Table 3**

| | |
|---|---|
| MR3.HoA => MR3.CoA | MR3 |
| MR3.CoA => MR2.new-CoA | MR2 |
| MR2.CoA => MR1.CoA | MR1 |

As an variation on the registration steps outlined in Figure 3, the mobile routers above MR3 (that is, MR2 and MR1) insert information in the original BU generated by MR3. The following steps may be carried out: MR3 sends a binding update (BU) to MR3_HA which contains the mapping between MR3.HoA and MR3.CoA; when the BU passes through MR2, MR2 responds by adding an address mapping between MR3.CoA and MR2.CoA into the registration message, remembering that it should send future mobility updates to MR3_HA (ie if MR2 obtains a new MR2.CoA); and, when the BU passes through MR1, MR1 responds by adding an address mapping between MR2.CoA and MR1.CoA into the registration message, remembering that MR1 should send future mobility updates to MR3_HA (for example, if MR1 obtains a new MR1.CoA). The advantage of this approach is the reduced signalling required to update the nested binding, since a common message is built up as the message travels through the layers of the mobile network. However a strong security relationship is required between the involved mobile routers, which generally is not possible. As an additional step in the signalling process, an intermediate MR in the (possibly nested) mobile network may request information about MR3_HA (address and possibly security information) before inserting an address mapping into the registration message travelling towards MR3_HA.

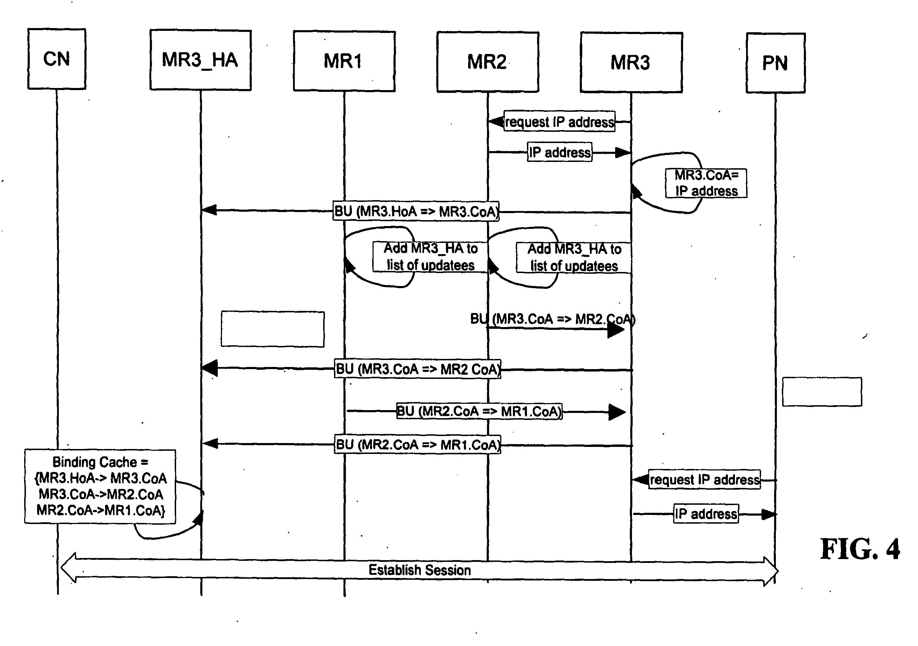

As a further variation to the registration steps outlined above, MR2 may sends its BU destined for MR3_HA via MR3 to make it easier to use existing security relationships for communication to or from MR3_HA. The main steps of signalling, with reference to Figure 4, are:
1. MR3 sends a binding update (BU) to MR3_HA which contains the mapping between MR3.HoA and MR3.CoA
2. when the BU passes through MR2, MR2 responds by (1) creating a BU which contains the mapping between MR3.CoA and MR2.CoA ; (2) sending this BU back to MR3 ; (3) remembering that it should send future mobility updates to MR3_HA (ie if MR2 obtains a new MR2.CoA)
3. when this return BU from MR2 arrives at MR3, it recognizes that it is in charge of forwarding the binding update to MR_HA
4. when the BU passes through MR1, MR1 responds by (1) creating a BU which contains the mapping between MR2.CoA and MR1.CoA ; (2) sending this BU back to MR3 ; (3) remembering that it should send future mobility updates to MR3_HA (ie if MR1 obtains a new MR1.CoA)
5. when the return BU from MR1 arrives at MR3, it recognizes that it is in charge of forwarding the binding update to MR_HA
The advantage of this approach resides in the enforcement of security principles, i.e. only MR3 registers binding updates with MR3_HA, whereas other binding information is forwarded to MR3. As a trade-off, more signalling messages are required. But this should not be a big concern, since the nested NEMOs are usually located in relative proximity.

With regard to the transmission of data from the mobile network to the main network, a personal node PN need not use a reverse tunnelling procedure, and may simply address packets with the topologically correct address of the node in the main network for which the packet is intended. It will also be noted that the binding cache may be formed at a calling node and/or the directory agent for one of the personal nodes. The cache information could be forwarded by MR3_HA, or could be sent from the mobile network..

With regard to reliability, one option to improve reliability would be that all messages are re-transmitted until they're acknowledged as successfully received. Another option is that as the BU from MR3 travels through the other MRs it 'collects' their BUs, ie the MR3_HA received one message containing three BU messages. This is probably the preferred option as it ensures that all BUs reach MR3_HA (or they all don't reach, ie fate sharing) and helps with the case discussed above where an intermediate MR moves (see MR2-moving discussion). It also gives confidence that MR1 and MR2 really are on the path.

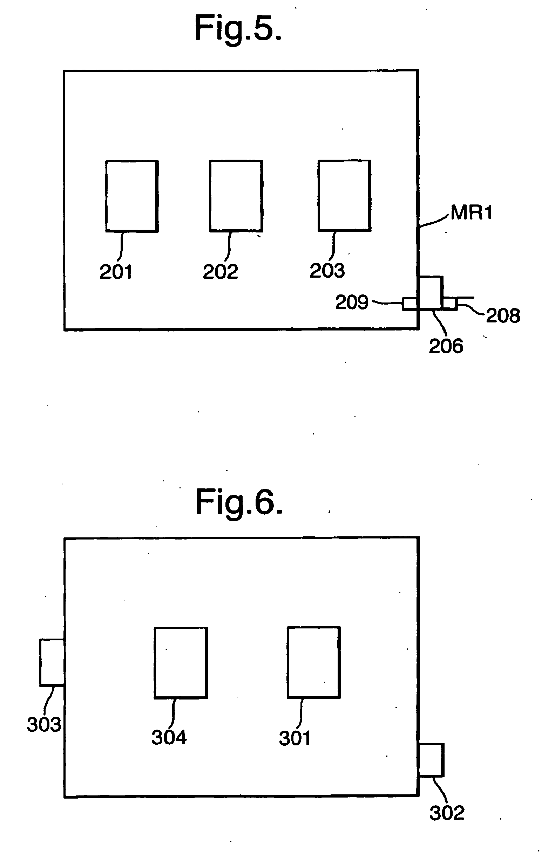

A mobile router such as MR1 is shown in more detail in Figure 5, the router having a monitoring stage 201 for monitoring messages passing through the router, to detect for the presence of a BU message. A memory 202 is provided for storing instruction in response to detecting a BU message, and for storing address information. A processor facility including at least one processor 203 is provided for operating the mobile router, for example for manipulating data for example at the monitoring stage, and/or in the memory 202, and for carrying out the registration steps outlined above. A routing stage 206 is provided for selectively routing messages to other nodes such as routers or personal nodes connected to MR1, for example MR2, and ON nodes. An upper attachment stage 208, here a wireless transmitter/receiver is provided for attaching (that is, being able to transmit and/or receive messages) to a higher level node, such as a base station or higher level router. To allow lower level nodes including routers to attach to it, the router has a lower attachment stage 209, which may for example be formed using a common transmitter/receiver or a wired connection means. The attachment stages are preferably configured to allow or facilitate temporary attachment.

A home agent HA is shown in Figure 6, the home agent having a memory 301 in the form of a routing table for storing routing information, such as a binding cache. An input stage 302 is provided for receiving messages (for example from a calling node CN), which messages will normally be in the form of packets each having a header portion containing address information. An output stage 303 is provided for forwarding the received messages with updated address information retrieved from the binding cache. A processor facility including at least one processor 304 is provided for processing data as required to perform the operations of the home agent.

It will be seen from the above embodiments that a binding cache for mobility in general can be located in a mobility agent and can store the home address to CoA mappings for mobile nodes, in particular when the nodes are in a moving network. The embodiments show how the binding cache for a moving network's contained PNs is established at a home agent at the top or high level hierarchy in the nested structure (e.g. at MR3_HA). Conveniently, different nodes can have responsibility for updating different parts of the binding cache - thus each mobile router is responsible for the part that relates to its CoA. This means that when a mobile router moves a specific signalling message can be sent to update the binding cache appropriately. Moreover, direct packet forwarding in both directions with a reduced need for encapsulation is possible in at least one embodiment, and signalling packets are used to confine the processing overhead since the invention reduced the need for data packets to be reverse routed)

## Claims

1. A telecommunications system including: a main network (14); a movable network (12) having a plurality of upper level nodes (ON); an upper level router means (MR1) for selectively routing data to one or more of the upper level nodes (ON); a plurality of lower level nodes (PN); and, a lower level router means (MR3) for selectively routing data to one of more of the lower level nodes (PN), the upper and lower level router means (MR1, MR3) being attachable such that when attached, the upper level router means (MR1) can route data towards the lower level router means (MR3), the main network (14) having at least one network node (MR3_HA) which is a directory agent, the directory agent storing routing information for forwarding received data to the lower level router means (MR3), and a plurality of spaced apart attachment points (BS-A, BS-B) to which the movable network (12) can temporarily attach, the upper level router means (MR1) being configured to transmit routing messages to the network node (MR3_HA), each routing message containing routing information facilitating the routing of data from the network node (MR3_HA) to the current attachment point (BS-A, BS-B) of the movable network (12), wherein the upper level router means (MR1) is configured to
(i) detect a first attachment event resulting from the attachment of the lower level router means (MR3), and, in response to the detection of the attachment event, to transmit a first routing message to the network node (MR3_HA), the first attachment event being the transmission from the lower level router means (MR3) of an update message to the directory agent (MR3_HA), the update message containing updated routing information to allow the directory agent (MR3_HA) to take into account the attachment of the lower level router means (MR3), and
(ii) detect a second attachment event resulting from the attachment of the movable network (12) to a new attachment point (BS-A, BS-B), and, in response to the detection of the second attachment event, to transmit a second routing message to the network node (MR3_HA).

2. A telecommunications system as claimed in any preceding claim, wherein the lower level nodes (PN) each have a directory agent (PN_HA) associated therewith for routing data thereto, and wherein the upper level router means (MR1) is configured to (i) store the network address of each directory agent (PN_HA) and (ii) transmit the second routing message to each stored network address.

3. A telecommunications system as claimed in any preceding claim, wherein the upper level router means (MR1) has a directory agent (MR1_HA), and the lower level router means (MR3) has a temporary address indicative of the topological position of the directory agent (MR1_HA) for the upper level router means (MR1), and wherein the lower level router means (MR3) is configured to transmit an update message upon attaching to the movable network (12), the update message containing the temporary address of the lower level router means (MR3).

4. A telecommunications system as claimed in claim 3, wherein the temporary address of the lower level router means (MR3) shares a common prefix portion with the network address of the directory agent (MR1_HA) for the upper level router means (MR1).

5. A telecommunications system as claimed in any preceding claim, wherein the second attachment event is the receipt by the upper level router means (MR1) of a new temporary address.

6. A telecommunications system as claimed in any preceding claim, wherein the lower level router means (MR3) is connected to the upper level router means (MR1) by a wireless link.

7. A telecommunications system as claimed in any preceding claim, wherein the movable network (12) includes an intermediate level router means (MR2) arranged between the upper level router means (MR1) and the lower level router means (MR3) such that update messages from the lower level router means (MR3) are routed through the intermediate level router means (MR2).

8. A telecommunications system as claimed in claim 7, wherein the intermediate level router means (MR2) is configures such that in response to detecting an update message from the lower level router means (MR3), the intermediate level router means (MR2) transmits an additional routing message containing routing information for routing data to the lower level router means (MR3).

9. A telecommunications system as claimed in claim 7 or claim 8, wherein the intermediate level router means (MR2) has a plurality of intermediate level nodes (ON) connected thereto, the intermediate level router means (MR2) being arranged to selectively route data to one or more of the intermediate level nodes (ON).

10. A telecommunications system as claimed in any of claims 7 to 9, wherein each of the lower level router means (MR3), the intermediate level router means (MR2) and the upper level router means (MR1) have a respective address allocated thereto, and wherein the addresses are transmitted by the upper level router means (MR1) to the main network (14), the upper level router means (MR1) transmitting sequence information indicating an order for each address relative to at least one other address.

11. A telecommunications system as claimed in claim 10, wherein the addresses are transmitted to the directory agent (MR3_HA) for the lower level router means (MR3), and wherein the directory agent (MR3_HA) stores the address as a binding cache.

12. A telecommunications system as claimed in claim 11, wherein the binding cache includes a plurality of fields, each of which is updateable by one of the upper, lower or intermediate router means (MR1, MR2, MR3).

13. A telecommunications system as claimed in claim 12, wherein each field contains a pair of address, a first field containing the addresses of the upper and intermediate level routers (MR1, MR2); a second field containing the addresses of the intermediate and lower level routers (MR2, MR3), and a third field containing the temporary address and the permanent address of the lower level router (MR3).

14. A telecommunications system as claimed in any of claims 7 to 13, wherein the lower level router means (MR3) is configured to transmit an update message on attaching to the movable network, the update message being routed through each of the upper level router means (MR1) and intermediate level router means (MR2), and wherein: (i) upon detecting the update message, the intermediate level router means (MR2) is configured to write to the update message its own temporary address and forward the once-written update message to the upper level router means (MR1); and, (ii) upon detecting the once-written update message, the upper level router means (MR1) is configured to write to the once-written update message its own temporary address and forward the twice-written update message to the directory agent (MR3_HA) for the lower level router means (MR3).

15. A telecommunications system as claimed in any of claims 7 to 13, wherein the lower level router means (MR3) is configured to transmit an update message on attaching to the movable network (12), the update message being routed through each of the upper level router means (MR1) and intermediate level router means (MR2), and wherein: (i) upon detecting the update message, the intermediate level router means (MR2) is configured to generate a further update message, the further update message containing a mapping between its own temporary address and the temporary address of the lower level router means (MR3); and, (ii) upon detecting the update message from the lower level router means (MR3), the upper level router means (MR1) is configured to generate a yet further update message, the yet further update message containing a mapping between the temporary address of the upper level router means (MR1) and the temporary address of the intermediate level router means (MR2).

16. A telecommunications system as claimed in claim 15, wherein the further update message and the yet further update message are each addressed to the directory agent (MR3_HA) of the lower level router means (MR3).

17. A telecommunications system as claimed in claim 15, wherein the further update message and the yet further update message are each transmitted back to the lower level router means (MR3), the lower level router means (MR3) being configured to re-send the further and yet further update messages to its directory agent (MR3_HA).

18. A telecommunications system as claimed in any preceding claim, wherein at least some of the nodes (PN, ON) are portable communications devices.

19. A telecommunications system as claimed in any preceding claim, wherein at least some of the nodes (PN, ON) are respectively connected to the lower level router means (MR3) and the upper level router means (MR1) by respective wireless links.

20. A telecommunications system as claimed in any preceding claim, wherein the routing message is indicative of the topological position of the current point of attachment (BS-A, BS-B) to which the movable network (12) is attached.

21. A telecommunications system as claimed in any preceding claim, wherein the attachment points (BS-A, BS-B) are provided by respective wireless communication means, the mobile network (12) including further wireless communication means such that a wireless link can be formed between an attachment point (BS-A, BS-B) and the mobile network (12) for communication therebetween.

22. A telecommunications system as claimed in any preceding claim, wherein the attachment points (BS-A, BS-B) are stationary.

23. A telecommunications system as claimed in claim 22, wherein the attachment points (BS-A, BS-B) are provided at respective ground base stations.

24. A telecommunications system as claimed in any preceding claim, wherein the at least one directory agent (MR3_HA) is provided at one or more ground nodes.

25. A telecommunications system as claimed in any preceding claim, wherein the main network (14) has a predetermined topological structure.

26. A telecommunications system as claimed in any preceding claim, wherein the mobile network (12) includes support means for supporting portable devices, the support means being common to each of the portable devices, such that movement of the support means causes a common movement of the portable devices.

27. A telecommunications system as claimed in claim 25, wherein the mobile network includes vehicle means.

28. A telecommunications system as claimed in any preceding claim, wherein a first router (MR1), in response to detecting a binding update or other update from a second node (PN) or a second router (MR2) beneath it, copies to memory or otherwise retains the target address that the update is addressed to, in association with an instruction such that: in response to the first router (MR1) receiving a new care of address or other indication that the point of attachment (BS-A, BS-B) of the first router has changed, the first router (MR1) transmits a further update message to the target address.

29. A telecommunications system as claimed in claim 28, wherein the further update message includes the new care of address of the first router.

30. A movable network (12) for communicating with a main network (14), the main network (14) having at least one network node (MR1_HA) which is a directory agent, the directory agent storing routing information for forwarding received data to a lower level router means (MR3) of the movable network (12), and a plurality of spaced apart attachment points (BS-A, BS-B) to which the movable network (12) can temporarily attach, the movable network (12) including: a plurality of upper level nodes (ON); an upper level router means (MR1) for selectively routing data to one or more of the upper level nodes (ON); a plurality of lower level nodes (PN); and, a lower level router means (MR3) for selectively routing data to one of more of the lower level nodes (PN), the upper and lower level router means (MR1, MR3) being attachable such that when attached, the upper level router means (MR1) can route data towards the lower level router means (MR3), the upper level router means (MR1) being configured to transmit routing messages to the network node (MR3_HA), each routing message containing routing information facilitating the routing of data from the network node (MR3_HA) to the current attachment point of the movable network (12), wherein the upper level router means (MR1) is configured to
(i) detect a first attachment event resulting from the attachment of the lower level router means (MR3), and, in response to the detection of the attachment event, to transmit a first routing message to the network node (MR3_HA), the first attachment event being the transmission from the lower level router means (MR3) of an update message to the directory agent (MR3_HA), the update message containing updated routing information to allow the directory agent (MR3_HA) to take into account the attachment of the lower level router means (MR3) ,and
(ii) detect a second attachment event resulting from the attachment of the movable network (12) to a new attachment point (BS-A, BS-B), and, in response to the detection of the second attachment event, to transmit a second routing message to the network node (MR3_HA).

## Patentansprüche

1. Telekommunikationssystem, das Folgendes umfasst: ein Haupt-Netzwerk (14); ein bewegliches Netzwerk (12), welches Folgendes beinhaltet: eine Mehrzahl von Knoten einer oberen Ebene (ON); ein Router-Mittel der oberen Ebene (MR1) zum selektiven Weiterleiten von Daten an einen oder mehrere Knoten der oberen Ebene (ON); eine Mehrzahl von Knoten einer unteren Ebene (PN); sowie ein Router-Mittel der unteren Ebene (MR3) zum selektiven Weiterleiten von Daten an einen oder mehrere der Knoten der unteren Ebene (PN), wobei die Router-Mittel der oberen und der unteren Ebene (MR1, MR3) derart angeschlossen werden können, dass, wenn sie angeschlossen sind, das Router-Mittel der oberen Ebene (MR1) Daten an das Router-Mittel der unteren Ebene (MR3) weiterleiten kann, wobei das Haupt-Netzwerk (14) mindestens einen Netzwerkknoten (MR3_HA), welcher ein Directory-Agent ist, wobei der Directory-Agent Routing-Informationen zum Weiterleiten von empfangenen Daten an das Router-Mittel der unteren Ebene (MR3) speichert, und eine Mehrzahl von in einem Abstand zueinander angeordneten Anschlusspunkten (BS-A, BS-B) aufweist, an die das bewegliche Netzwerk (12) vorübergehend angeschlossen werden kann, wobei das Router-Mittel der oberen Ebene (MR1) für das Senden von Routing-Nachrichten an den Netzwerkknoten (MR3_HA) konfiguriert ist, wobei jede Routing-Nachricht Informationen zur Weglenkung enthält, die die Weiterleitung von Daten von dem Netzwerkknoten (MR3_HA) an den aktuellen Anschlusspunkt (BS-A, BS-B) des beweglichen Netzwerks (12) ermöglichen, wobei das Router-Mittel der oberen Ebene (MR1) dafür konfiguriert ist,
(i) ein erstes Anschlussereignis zu erkennen, das durch den Anschluss des Router-Mittels der unteren Ebene (MR3) verursacht wird, und als Reaktion auf das Erkennen des Anschlussereignisses eine erste Routing-Nachricht an den Netzwerkknoten (MR3_HA) zu senden, wobei das erste Anschlussereignis die Übertragung einer Aktualisierungsnachricht von dem Router-Mittel der unteren Ebene (MR3) an den Directory-Agenten (MR3_HA) ist, wobei die Aktualisierungsnachricht aktualisierte Routing-Informationen enthält, die es dem Directory-Agenten (MR3_HA) erlauben, den Anschluss des Router-Mittels der unteren Ebene (MR3) zu berücksichtigen, und
(ii) ein zweites Anschlussereignis zu erkennen, das durch den Anschluss des beweglichen Netzwerks (12) an einen neuen Anschlusspunkt (BS-A, BS-B) verursacht wird, und als Reaktion auf das Erkennen des zweiten Anschlussereignisses eine zweite Routing-Nachricht an den Netzwerkknoten (MR3_HA) zu senden.

2. Telekommunikationssystem gemäß Anspruch 1, wobei jedem der Knoten der unteren Ebene (PN) jeweils ein Directory-Agent (PN_HA) zugeordnet ist, um Daten an ihn weiterzuleiten, und wobei das Router-Mittel der oberen Ebene (MR1) dafür konfiguriert ist, (i) die Netzwerkadresse jedes Directory-Agenten (PN_HA) zu speichern und (ii) die zweite Routing-Nachricht an jede gespeicherte Netzwerkadresse zu senden.

3. Telekommunikationssystem gemäß einem der vorstehenden Ansprüche, wobei das Router-Mittel der oberen Ebene (MR1) einen Directory-Agenten (MR1_HA) besitzt und das Router-Mittel der unteren Ebene (MR3) eine temporäre Adresse besitzt, die die topologische Position des Directory-Agenten (MR1_HA) für das Router-Mittel der oberen Ebene (MR1) angibt, und wobei das Router-Mittel der unteren Ebene (MR3) dafür konfiguriert ist, bei Anschluss an das bewegliche Netzwerk (12) eine Aktualisierungsnachricht zu senden, wobei die Aktualisierungsnachricht die temporäre Adresse des Router-Mittels der unteren Ebene (MR3) enthält.

4. Telekommunikationssystem gemäß Anspruch 3, wobei die temporäre Adresse des Router-Mittels der unteren Ebene (MR3) einen gleichen Präfix-Teil hat wie die Netzwerkadresse des Directory-Agenten (MR1_HA) für das Router-Mittel der oberen Ebene (MR1).

5. Telekommunikationssystem gemäß einem der vorstehenden Ansprüche, wobei das zweite Anschlussereignis der Empfang einer neuen temporären Adresse durch das Router-Mittel der oberen Ebene (MR1) ist.

6. Telekommunikationssystem gemäß einem der vorstehenden Ansprüche, wobei das Router-Mittel der unteren Ebene (MR3) mit dem Router-Mittel der oberen Ebene (MR1) über eine drahtlose Verbindung verbunden ist.

7. Telekommunikationssystem gemäß einem der vorstehenden Ansprüche, wobei das bewegliche Netzwerk (12) ein Router-Mittel einer Zwischenebene (MR2) enthält, das zwischen dem Router-Mittel der oberen Ebene (MR1) und dem Router-Mittel der unteren Ebene (MR3) angeordnet ist, sodass Aktualisierungsnachrichten von dem Router-Mittel der unteren Ebene (MR3) über das Router-Mittel der Zwischenebene (MR2) geleitet werden.

8. Telekommunikationssystem gemäß Anspruch 7, wobei das Router-Mittel der Zwischenebene (MR2) derart konfiguriert ist, dass das Router-Mittel der Zwischenebene (MR2) als Reaktion auf das Erkennen einer Aktualisierungsnachricht von dem Router-Mittel der unteren Ebene (MR3) eine zusätzliche Routing-Nachricht sendet, die Routing-Informationen zum Weiterleiten von Daten an das Router-Mittel der unteren Ebene (MR3) enthält.

9. Telekommunikationssystem gemäß Anspruch 7 oder Anspruch 8, wobei mit dem Router-Mittel der Zwischenebene (MR2) eine Mehrzahl von Knoten der Zwischenebene (ON) verbunden ist, wobei das Router-Mittel der Zwischenebene (MR2) dafür ausgelegt ist, selektiv Daten an einen oder mehrere der Knoten der Zwischenebene (ON) weiterzuleiten.

10. Telekommunikationssystem gemäß einem der Ansprüche 7 bis 9, wobei jedem der Router-Mittel der unteren Ebene (MR3), Router-Mittel der Zwischenebene (MR2) und Router-Mittel der oberen Ebene (MR1) eine jeweilige Adresse zugewiesen ist, und wobei die Adressen von dem Router-Mittel der oberen Ebene (MR1) an das Haupt-Netzwerk (14) übertragen werden, wobei das Router-Mittel der oberen Ebene (MR1) Abfolgeinformationen überträgt, die eine Reihenfolge für jede Adresse bezogen auf mindestens eine andere Adresse angeben.

11. Telekommunikationssystem gemäß Anspruch 10, wobei die Adressen an den Directory-Agenten (MR3_HA) für das Router-Mittel der unteren Ebene (MR3) übertragen werden und wobei der Directory-Agent (MR3_HA) die Adresse als Binding-Cache speichert.

12. Telekommunikationssystem gemäß Anspruch 11, wobei der Binding-Cache eine Mehrzahl von Feldern beinhaltet, von denen jedes durch eines der Router-Mittel der oberen, der unteren oder der Zwischenebene (MR1, MR2, MR3) aktualisiert werden kann.

13. Telekommunikationssystem gemäß Anspruch 12, wobei jedes Feld ein Paar Adressen enthält, wobei ein erstes Feld die Adressen der Router-Mittel der oberen und der Zwischenebene (MR1, MR2) enthält; ein zweites Feld die Adressen der Router-Mittel der Zwischen- und der unteren Ebene (MR2, MR3) enthält und ein drittes Feld die temporäre Adresse und die permanente Adresse des Router-Mittels der unteren Ebene (MR3) enthält.

14. Telekommunikationssystem gemäß einem der Ansprüche 7 bis 13, wobei das Router-Mittel der unteren Ebene (MR3) dafür konfiguriert ist, bei Anschluss an das bewegliche Netzwerk eine Aktualisierungsnachricht zu senden, wobei die Aktualisierungsnachricht über jedes der Router-Mittel der oberen Ebene (MR1) und Router-Mittel der Zwischenebene (MR2) geleitet wird und wobei: (i) das Router-Mittel der Zwischenebene (MR2) dafür konfiguriert ist, auf das Erkennen der Aktualisierungsnachricht hin seine eigene temporäre Adresse in die Aktualisierungsnachricht zu schreiben und die einmal ergänzte Aktualisierungsnachricht an das Router-Mittel der oberen Ebene (MR1) weiterzuleiten; und (ii) das Router-Mittel der oberen Ebene (MR1) dafür konfiguriert ist, auf das Erkennen der einmal ergänzten Aktualisierungsnachricht hin seine eigene temporäre Adresse in die einmal ergänzte Aktualisierungsnachricht zu schreiben und die zweimal ergänzte Aktualisierungsnachricht an den Directory-Agenten (MR3_HA) für das Router-Mittel der unteren Ebene (MR3) weiterzuleiten.

15. Telekommunikationssystem gemäß einem der Ansprüche 7 bis 13, wobei das Router-Mittel der unteren Ebene (MR3) dafür konfiguriert ist, bei Anschluss an das bewegliche Netzwerk (12) eine Aktualisierungsnachricht zu senden, wobei die Aktualisierungsnachricht über jedes der Router-Mittel der oberen Ebene (MR1) und Router-Mittel der Zwischenebene (MR2) geleitet wird und wobei: (i) das Router-Mittel der Zwischenebene (MR2) dafür konfiguriert ist, auf das Erkennen der Aktualisierungsnachricht hin eine weitere Aktualisierungsnachricht zu erzeugen, wobei die weitere Aktualisierungsnachricht eine Zuordnung zwischen ihrer eigenen temporären Adresse und der temporären Adresse des Router-Mittels der unteren Ebene (MR3) enthält; und (ii) das Router-Mittel der oberen Ebene (MR1) dafür konfiguriert ist, auf das Erkennen der Aktualisierungsnachricht von dem Router-Mittel der unteren Ebene (MR3) hin noch eine weitere Aktualisierungsnachricht zu erzeugen, wobei die noch weitere Aktualisierungsnachricht eine Zuordnung zwischen der temporären Adresse des Router-Mittels der oberen Ebene (MR1) und der temporären Adresse des Router-Mittels der Zwischenebene (MR2) enthält.

16. Telekommunikationssystem gemäß Anspruch 15, wobei die weitere Aktualisierungsnachricht und die noch weitere Aktualisierungsnachricht jeweils an den Directory-Agenten (MR3_HA) des Router-Mittels der unteren Ebene (MR3) adressiert sind.

17. Telekommunikationssystem gemäß Anspruch 15, wobei die weitere Aktualisierungsnachricht und die noch weitere Aktualisierungsnachricht jeweils an das Router-Mittel der unteren Ebene (MR3) zurück übertragen werden, wobei das Router-Mittel der unteren Ebene (MR3) dafür konfiguriert ist, die weitere und die noch weitere Aktualisierungsnachricht erneut an seinen Directory-Agenten (MR3_HA) zu senden.

18. Telekommunikationssystem gemäß einem der vorstehenden Ansprüche, wobei mindestens einige der Knoten (PN, ON) portable Kommunikationsendgeräte sind.

19. Telekommunikationssystem gemäß einem der vorstehenden Ansprüche, wobei mindestens einige der Knoten (PN, ON) mit dem Router-Mittel der unteren Ebene (MR3) bzw. dem Router-Mittel der oberen Ebene (MR1) über jeweilige drahtlose Verbindungen verbunden sind.

20. Telekommunikationssystem gemäß einem der vorstehenden Ansprüche, wobei die Routing-Nachricht die topologische Position des aktuellen Anschlusspunkts (BS-A, BS-B) angibt, an dem das bewegliche Netzwerk (12) angeschlossen ist.

21. Telekommunikationssystem gemäß einem der vorstehenden Ansprüche, wobei die Anschlusspunkte (BS-A, BS-B) von jeweiligen drahtlosen Kommunikationsmitteln bereitgestellt werden und das mobile Netzwerk (12) weitere drahtlose Kommunikationsmittel umfasst, sodass eine drahtlose Verbindung zwischen einem Anschlusspunkt (BS-A, BS-B) und dem mobilen Netzwerk (12) für die Kommunikation zwischen diesen hergestellt werden kann.

22. Telekommunikationssystem gemäß einem der vorstehenden Ansprüche, wobei die Anschlusspunkte (BS-A, BS-B) ortsfest sind.

23. Telekommunikationssystem gemäß Anspruch 22, wobei die Anschlusspunkte (BS-A, BS-B) an jeweiligen Grund-Basisstationen bereitgestellt werden.

24. Telekommunikationssystem gemäß einem der vorstehenden Ansprüche, wobei der mindestens eine Directory-Agent (MR3_HA) an einem oder mehreren Grund-Knoten bereitgestellt wird.

25. Telekommunikationssystem gemäß einem der vorstehenden Ansprüche, wobei das Haupt-Netzwerk (14) eine vorab festgelegte topologische Struktur aufweist.

26. Telekommunikationssystem gemäß einem der vorstehenden Ansprüche, wobei das mobile Netzwerk (12) Unterstützungsmittel beinhaltet, um portable Geräte zu unterstützen, wobei das Unterstützungsmittel für jedes der portablen Geräte dasselbe ist, sodass eine Bewegung des Unterstützungsmittels eine gemeinsame Bewegung der portablen Geräte bewirkt.

27. Telekommunikationssystem gemäß Anspruch 25, wobei das mobile Netzwerk Verkehrsmittel umfasst.

28. Telekommunikationssystem gemäß einem der vorstehenden Ansprüche, wobei ein erstes Router-Mittel (MR1) als Reaktion auf das Erkennen einer Binding-Update-Nachricht oder einer anderen Aktualisierungsnachricht von einem zweiten Knoten (PN) oder einem zweiten, ihm untergeordneten Router-Mittel (MR2) die Zieladresse, an die die Aktualisierungsnachricht gerichtet ist, in seinen Speicher kopiert oder auf andere Weise speichert, zusammen mit einer Anweisung wie beispielsweise: Als Reaktion darauf, dass das erste Router-Mittel (MR1) eine neue Care-of-Adresse oder eine sonstige Anzeige erhält, dass sich der Anschlusspunkt (BS-A, BS-B) des ersten Router-Mittels geändert hat, überträgt das erste Router-Mittel (MR1) eine weitere Aktualisierungsnachricht an die Zieladresse.

29. Telekommunikationssystem gemäß Anspruch 28, wobei die weitere Aktualisierungsnachricht die neue Care-of-Adresse des ersten Router-Mittels enthält.

30. Bewegliches Netzwerk (12) für die Kommunikation mit einem Haupt-Netzwerk (14), wobei das Haupt-Netzwerk (14) mindestens einen Netzwerkknoten (MR1_HA) beinhaltet, welcher ein Directory-Agent ist, wobei der Directory-Agent Routing-Informationen zum Weiterleiten von empfangenen Daten an ein Router-Mittel einer unteren Ebene (MR3) des beweglichen Netzwerks (12) speichert, sowie eine Mehrzahl von in einem Abstand zueinander angeordneten Anschlusspunkten (BS-A, BS-B), an die das bewegliche Netzwerk (12) vorübergehend angeschlossen werden kann, wobei das bewegliche Netzwerk (12) Folgendes beinhaltet: eine Mehrzahl von Knoten einer oberen Ebene (ON); ein Router-Mittel der oberen Ebene (MR1) zum selektiven Weiterleiten von Daten an einen oder mehrere der Knoten der oberen Ebene (ON); eine Mehrzahl von Knoten einer unteren Ebene (PN); sowie ein Router-Mittel der unteren Ebene (MR3) zum selektiven Weiterleiten von Daten an einen oder mehrere der Knoten der unteren Ebene (PN), wobei die Router-Mittel der oberen und der unteren Ebene (MR1, MR3) derart angeschlossen werden können, dass, wenn sie angeschlossen sind, das Router-Mittel der oberen Ebene (MR1) Daten an das Router-Mittel der unteren Ebene (MR3) weiterleiten kann, wobei das Router-Mittel der oberen Ebene (MR1) für das Senden von Routing-Nachrichten an den Netzwerkknoten (MR3_HA) konfiguriert ist, wobei jede Routing-Nachricht Informationen zur Weglenkung enthält, die die Weiterleitung von Daten von dem Netzwerkknoten (MR3_HA) an den aktuellen Anschlusspunkt des beweglichen Netzwerks (12) ermöglichen, wobei das Router-Mittel der oberen Ebene (MR1) dafür konfiguriert ist,
(i) ein erstes Anschlussereignis zu erkennen, das durch den Anschluss des Router-Mittels der unteren Ebene (MR3) verursacht wird, und als Reaktion auf das Erkennen des Anschlussereignisses eine erste Routing-Nachricht an den Netzwerkknoten (MR3_HA) zu senden, wobei das erste Anschlussereignis die Übertragung einer Aktualisierungsnachricht von dem Router-Mittel der unteren Ebene (MR3) an den Directory-Agenten (MR3_HA) ist, wobei die Aktualisierungsnachricht aktualisierte Routing-Informationen enthält, die es dem Directory-Agenten (MR3_HA) erlauben, den Anschluss des Router-Mittels der unteren Ebene (MR3) zu berücksichtigen, und
(ii) ein zweites Anschlussereignis zu erkennen, das durch den Anschluss des beweglichen Netzwerks (12) an einen neuen Anschlusspunkt (BS-A, BS-B) verursacht wird, und als Reaktion auf das Erkennen des zweiten Anschlussereignisses eine zweite Routing-Nachricht an den Netzwerkknoten (MR3_HA) zu senden.

## Revendications

1. Système de télécommunications incluant: un réseau principal (14) ; un réseau mobile (12) ayant une pluralité de noeuds de niveau supérieur (ON) ; un moyen de routeur de niveau supérieur (MR1) pour acheminer sélectivement des données vers un ou plusieurs des noeuds de niveau supérieur (ON) ; une pluralité de noeuds de niveau inférieur (PN) ; et un moyen de routeur de niveau inférieur (MR3) pour acheminer sélectivement des données vers un ou plusieurs des noeuds de niveau inférieur (PN), les moyens de routeur de niveaux supérieur et inférieur (MR1, MR3) pouvant être raccordés de telle manière que lorsqu'ils sont raccordés, le moyen de routeur de niveau supérieur (MR1) peut acheminer des données vers le moyen de routeur de niveau inférieur (MR3), le réseau principal (14) ayant au moins un noeud de réseau (MR3_HA) qui est un agent de répertoire, l'agent de répertoire stockant des informations d'acheminement pour envoyer les données reçues au routeur de niveau inférieur (MR3), et une pluralité de points de raccordement (BS-A, BS-B) auxquels le réseau mobile (12) peut se raccorder temporairement, le moyen de routeur de niveau supérieur (MR1) étant configuré de manière à transmettre des messages d'acheminement au noeud de réseau (MR3_HA), chaque message d'acheminement contenant des informations d'acheminement facilitant l'acheminement de données du noeud de réseau (MR3_HA) au point de raccordement (BS-A, BS-B) actuel du réseau mobile (12), dans lequel le moyen de routeur de niveau supérieur (MR1) est configuré de manière à
(i) détecter un premier événement de raccordement résultant du raccordement du moyen de routeur de niveau inférieur (MR3), et, en réponse à la détection de l'événement de raccordement, transmettre un premier message d'acheminement au noeud de réseau (MR3_HA), le premier événement de raccordement étant la transmission à partir du moyen de routeur de niveau inférieur (MR3) d'un message de mise à jour à l'agent de répertoire (MR3_HA), le message de mise à jour contenant des informations d'acheminement mises à jour pour permettre que l'agent de répertoire (MR3_HA) prenne en compte le raccordement du moyen de routeur de niveau inférieur (MR3), et
(ii) détecter un deuxième événement de raccordement résultant du raccordement du réseau mobile (12) à un nouveau point de raccordement (BS-A, BS-B), et, en réponse à la détection du deuxième événement de raccordement, transmettre un deuxième message d'acheminement au noeud de réseau (MR3_HA).

2. Système de télécommunications selon l'une quelconque des revendications précédentes, dans lequel les noeuds de niveau inférieur (PN) ont chacun un agent de répertoire (PN_HA) associé à celui-ci pour acheminer des données vers celui-ci, et dans lequel le moyen de routeur de niveau supérieur (MR1) est configuré de manière à (i) stocker l'adresse réseau de chaque agent de répertoire (PN_HA) et (ii) transmettre le deuxième message d'acheminement à chaque adresse réseau stockée.

3. Système de télécommunications selon l'une quelconque des revendications précédentes, dans lequel le moyen de routeur de niveau supérieur (MR1) a un agent de répertoire (MR1_HA), et le moyen de routeur de niveau inférieur (MR3) a une adresse temporaire indicatrice de la position topologique de l'agent de répertoire (MR1_HA) pour le moyen de routeur de niveau supérieur (MR1), et dans lequel le moyen de routeur de niveau inférieur (MR3) est configuré de manière à transmettre un message de mise à jour au moment du raccordement au réseau mobile (12), le message de mise à jour contenant l'adresse temporaire du moyen de routeur de niveau inférieur (MR3).

4. Système de télécommunications selon la revendication 3, dans lequel l'adresse temporaire du moyen de routeur de niveau inférieur (MR3) partage une portion de préfixe commune avec l'adresse réseau de l'agent de répertoire (MR1_HA) pour le moyen de routeur de niveau supérieur (MR1).

5. Système de télécommunications selon l'une quelconque des revendications précédentes, dans lequel le deuxième événement de raccordement est la réception par le moyen de routeur de niveau supérieur (MR1) d'une nouvelle adresse temporaire.

6. Système de télécommunications selon l'une quelconque des revendications précédentes, dans lequel le moyen de routeur de niveau inférieur (MR3) est connecté au moyen de routeur de niveau supérieur (MR1) par une liaison sans fil.

7. Système de télécommunications selon l'une quelconque des revendications précédentes, dans lequel le réseau mobile (12) inclut un moyen de routeur de niveau intermédiaire (MR2) agencé entre le moyen de routeur de niveau supérieur (MR1) et le moyen de routeur de niveau inférieur (MR3) de telle manière que les messages de mise à jour provenant du moyen de routeur de niveau inférieur (MR3) sont acheminés par le moyen de routeur de niveau intermédiaire (MR2).

8. Système de télécommunications selon la revendication 7, dans lequel le moyen de routeur de niveau intermédiaire (MR2) est configuré de telle manière qu'en réponse à la détection d'un message de mise à jour provenant du moyen de routeur de niveau inférieur (MR3), le moyen de routeur de niveau intermédiaire (MR2) transmet un message d'acheminement additionnel contenant des informations d'acheminement pour acheminer des données vers le moyen de routeur de niveau inférieur (MR3).

9. Système de télécommunications selon la revendication 7 ou la revendication 8, dans lequel le moyen de routeur de niveau intermédiaire (MR2) a une pluralité de noeuds de niveau intermédiaire (ON) connectés à celui-ci, le moyen de routeur de niveau intermédiaire (MR2) étant agencé de manière à acheminer sélectivement des données vers un ou plusieurs des noeuds de niveau intermédiaire (ON).

10. Système de télécommunications selon l'une quelconque des revendications 7 à 9, dans lequel chacun du moyen de routeur de niveau inférieur (MR3), du moyen de routeur de niveau intermédiaire (MR2) et du moyen de routeur de niveau supérieur (MR1) a une adresse respective attribuée à celui-ci, et dans lequel les adresses sont transmises par le moyen de routeur de niveau supérieur (MR1) au réseau principal (14), le moyen de routeur de niveau supérieur (MR1) transmettant des informations de séquence indiquant un ordre pour chaque adresse par rapport à au moins une autre adresse.

11. Système de télécommunications selon la revendication 10, dans lequel les adresses sont transmises à l'agent de répertoire (MR3_HA) pour le moyen de routeur de niveau inférieur (MR3), et dans lequel l'agent de répertoire (MR3_HA) stocke l'adresse comme un cache de liaison.

12. Système de télécommunications selon la revendication 11, dans lequel le cache de liaison inclut une pluralité de champs, dont chacun peut être mis à jour par l'un des moyens de routeur supérieur, inférieur ou intermédiaire (MR1, MR2, MR3).

13. Système de télécommunications selon la revendication 12, dans lequel chaque champ contient une paire d'adresse, un premier champ contenant les adresses des routeurs de niveaux supérieur et intermédiaire (MR1, MR2) ; un deuxième champ contenant les adresses des routeurs de niveaux intermédiaire et inférieur (MR2, MR3), et un troisième champ contenant l'adresse temporaire et l'adresse permanente du routeur de niveau inférieur (MR3).

14. Système de télécommunications selon l'une quelconque des revendications 7 à 13, dans lequel le moyen de routeur de niveau inférieur (MR3) est configuré de manière à transmettre un message de mise à jour au moment de son raccordement au réseau mobile, le message de mise à jour étant acheminé par chacun du moyen de routeur de niveau supérieur (MR1) et du moyen de routeur de niveau intermédiaire (MR2), et dans lequel : (i) à la détection du message de mise à jour, le moyen de routeur de niveau intermédiaire (MR2) est configuré de manière à écrire dans le message de mise à jour sa propre adresse temporaire et à envoyer le message de mise à jour écrit une fois au moyen de routeur de niveau supérieur (MR1) ; et, (ii) à la détection du message de mise à jour écrit une fois, le moyen de routeur de niveau supérieur (MR1) est configuré pour écrire dans le message de mise à jour écrit une fois sa propre adresse temporaire et à envoyer le message de mise à jour écrit deux fois à l'agent de répertoire (MR3_HA) pour le moyen de routeur de niveau inférieur (MR3).

15. Système de télécommunications selon l'une quelconque des revendications 7 à 13, dans lequel le moyen de routeur de niveau inférieur (MR3) est configuré de manière à transmettre un message de mise à jour au moment de son raccordement au réseau mobile (12), le message de mise à jour étant acheminé par chacun du moyen de routeur de niveau supérieur (MR1) et du moyen de routeur de niveau intermédiaire (MR2), et dans lequel : (i) à la détection du message de mise à jour, le moyen de routeur de niveau intermédiaire (MR2) est configuré de manière à générer un autre message de mise à jour, l' autre message de mise à jour contenant une mappe entre sa propre adresse temporaire et l'adresse temporaire du moyen de routeur de niveau inférieur (MR3) ; et, (ii) à la détection du message de mise à jour provenant du moyen de routeur de niveau inférieur (MR3), le moyen de routeur de niveau supérieur (MR1) est configuré pour générer encore un autre message de mise à jour, encore l'autre message de mise à jour contenant une mappe entre l'adresse temporaire du moyen de routeur de niveau supérieur (MR1) et l'adresse temporaire du moyen de routeur de niveau intermédiaire (MR2).

16. Système de télécommunications selon la revendication 15, dans lequel l'autre message de mise à jour et encore l'autre message de mise à jour sont chacun adressés à l'agent de répertoire (MR3_HA) du moyen de routeur de niveau inférieur (MR3).

17. Système de télécommunications selon la revendication 15, dans lequel l'autre message de mise à jour et encore l'autre message de mise à jour sont chacun retransmis au moyen de routeur de niveau inférieur (MR3), le moyen de routeur de niveau inférieur (MR3) étant configuré pour renvoyer l'autre et encore l'autre messages de mise à jour à son agent de répertoire (MR3_HA).

18. Système de télécommunications selon l'une quelconque des revendications précédentes, dans lequel au moins certains des noeuds (PN, ON) sont des dispositifs de communications portables.

19. Système de télécommunications selon l'une quelconque des revendications précédentes, dans lequel au moins certains des noeuds (PN, ON) sont respectivement connectés au moyen de routeur de niveau inférieur (MR3) et au moyen de routeur de niveau supérieur (MR1) par des liaisons sans fil respectives.

20. Système de télécommunications selon l'une quelconque des revendications précédentes, dans lequel le message d'acheminement est indicatif de la position topologique du point de raccordement (BS-A, BS-B) actuel auquel le réseau mobile (12) est raccordé.

21. Système de télécommunications selon l'une quelconque des revendications précédentes, dans lequel les points de raccordement (BS-A, BS-B) sont prévus par des moyens de communication sans fil respectifs, le réseau mobile (12) incluant d'autres moyens de communication sans fil de telle manière qu'une liaison sans fil peut être formée entre un point de raccordement (BS-A, BS-B) et le réseau mobile (12) pour une communication entre ceux-ci.

22. Système de télécommunications selon l'une quelconque des revendications précédentes, dans lequel les points de raccordement (BS-A, BS-B) sont fixes.

23. Système de télécommunications selon la revendication 22, dans lequel les points de raccordement (BS-A, BS-B) sont prévus au niveau de stations de base terrestres respectives.

24. Système de télécommunications selon l'une quelconque des revendications précédentes, dans lequel l'au moins un agent de répertoire (MR3_HA) est prévu au niveau d'un ou plusieurs noeuds terrestres.

25. Système de télécommunications selon l'une quelconque des revendications précédentes, dans lequel le réseau principal (14) a une structure topologique prédéterminée.

26. Système de télécommunications selon l'une quelconque des revendications précédentes, dans lequel le réseau mobile (12) inclut un moyen de support pour supporter des dispositifs portables, le moyen de support étant commun à chacun des dispositifs portables, de sorte que le mouvement du moyen de support cause un mouvement commun des dispositifs portables.

27. Système de télécommunications selon la revendication 25, dans lequel le réseau mobile inclut un moyen véhiculaire.

28. Système de télécommunications selon l'une quelconque des revendications précédentes, dans lequel un premier routeur (MR1), en réponse à la détection d'une mise à jour de liaison ou autre mise à jour provenant d'un deuxième noeud (PN) ou d'un deuxième routeur (MR2) inférieur à lui-même, copie dans sa mémoire ou de tout autre manière conserve l'adresse cible à laquelle la mise à jour est adressée, en association avec une instruction de sorte que : en réponse au premier routeur (MR1) recevant une nouvelle adresse temporaire ou autre indication que le point de raccordement (BS-A, BS-B) du premier routeur a changé, le premier routeur (MR1) transmet un autre message de mise à jour à l'adresse cible.

29. Système de télécommunications selon la revendication 28, dans lequel l'autre message de mise à jour inclut la nouvelle adresse temporaire du premier routeur.

30. Réseau mobile (12) pour une communication avec un réseau principal (14), le réseau principal (14) ayant au moins un noeud de réseau (MR1_HA) qui est un agent de répertoire, l'agent de répertoire stockant des informations d'acheminement pour envoyer des données reçues à un moyen de routeur de niveau inférieur (MR3) du réseau mobile (12), et une pluralité de points de raccordement (BS-A, BS-B) auxquels le réseau mobile (12) peut être temporairement raccordé, le réseau mobile (12) incluant : une pluralité de noeuds de niveau supérieur (ON) ; un moyen de routeur de niveau supérieur (MR1) pour acheminer sélectivement des données vers un ou plusieurs des noeuds de niveau supérieur (ON) ; une pluralité de noeuds de niveau inférieur (PN) ; et un moyen de routeur de niveau inférieur (MR3) pour acheminer sélectivement des données vers un ou plusieurs des noeuds de niveau inférieur (PN), les moyens de routeur de niveaux supérieur et inférieur (MR1, MR3) pouvant être raccordés de telle manière que lorsqu'ils sont raccordés, le moyen de routeur de niveau supérieur (MR1) peut acheminer des données vers le moyen de routeur de niveau inférieur (MR3), le moyen de routeur de niveau supérieur (MR1) étant configuré de manière à transmettre des messages d'acheminement au noeud de réseau (MR3_HA), chaque message d'acheminement contenant des informations d'acheminement facilitant l'acheminement de données du noeud de réseau (MR3_HA) au point de raccordement actuel du réseau mobile (12), dans lequel le moyen de routeur de niveau supérieur (MR1) est configuré de manière à
(i) détecter un premier événement de raccordement résultant du raccordement du moyen de routeur de niveau inférieur (MR3), et, en réponse à la détection de l'événement de raccordement, transmettre un premier message d'acheminement au noeud de réseau (MR3_HA), le premier événement de raccordement étant la transmission à partir du moyen de routeur de niveau inférieur (MR3) d'un message de mise à jour à l'agent de répertoire (MR3_HA), le message de mise à jour contenant des informations d'acheminement mises à jour pour permettre que l'agent de répertoire (MR3_HA) prenne en compte le raccordement du moyen de routeur de niveau inférieur (MR3), et
(ii) détecter un deuxième événement de raccordement résultant du raccordement du réseau mobile (12) à un nouveau point de raccordement (BS-A, BS-B), et, en réponse à la détection du deuxième événement de raccordement, transmettre un deuxième message d'acheminement au noeud de réseau (MR3_HA).
